# EUROPEAN PATENT APPLICATION

(11) **EP 0 844 746 A2**
(43) Date of publication of application: **27.05.1998**
(21) Application number: 97309330.5
(22) Date of filing: 19.11.1997
(51) Int. Cl.: H04B 7/185

(54) **Communications method and apparatus with ressource allocation for avoiding interferences**

(30) Priority: 20.11.1996 GB 9624144
(71) Applicant: ICO Services Ltd., London W6 9BN (GB)
(72) Inventor: Chambers, Charles, Great Shelford, Cambridge, CB2 (GB); Bjornstrom, Gunnar Arvid, London, W6 9BN (GB); Sayegh, Soheil Iskandar, London, W6 9BN (GB)
(74) Representative: Read, Matthew Charles

(57) **Abstract**

In a communication system, a number of different transmissions are made through a common resource. Data relating to the transmissions is available at each of a number of different processors, each of which determine how the transmissions are to share the common resource. For example, in mobile satellite communications system, a number of stations 12 transmit messages through the same satellite transponder. Each earth station 12 receives information about messages waiting for transmission at the other earth stations 12, and determines the transmission timing of the messages so that they do not overlap at the satellite 14.

Where acknowledgement of the messages by mobile terminals 16 is required, the timing of the acknowledgements is controlled so that peaks in acknowledgement traffic are spread in time relative to peaks in message traffic.

## Description

The present invention relates to a communication method and apparatus, particularly for use in a mobile communication system.

Terrestrial cellular communication systems are well-known in the art and a number of standards exist which define different signalling protocols for them, such as the GSM standard and the PCN standard. Details of these standards are given for example in "Mobile Radio Technology" by Gordon White, Butterworth Heinemann, 1994. The GSM and PCN systems are digital communication systems and allow paging and data communications in addition to voice communications. In the GSM system, a short message service (SMS) is provided for transmitting short messages to mobile terminals.

Mobile satellite communication systems have also been proposed in which radio frequency links are provided by a constellation of satellites, which may act as repeaters of signals transmitted from ground stations or may perform processing or switching of communications traffic. These satellite communication systems provide much greater coverage than terrestrial cellular systems.

One example of such a system is the ICO™ system, aspects of which are described in patent publications WO 95/28747, WO 96/03814 and GB 2295296A. Other examples include the Inmarsat™ satellite system as described in "Satellite Communications: Principles and Applications" by Calcutt and Tetley, published 1994 by Edward Arnold, the Iridium™ satellite cellular system, described for example in EP-A-0365885, and the Odyssey™ system described for example in EP-A-0510787, EP-A-0575678 and EP-A-0648027.

In both terrestrial and satellite communication systems, the bandwidth available to the system is limited and it is desirable to make use of the available bandwidth as efficiently as possible so as to maximise the capacity of the system and therefore its earning potential.

In satellite communication systems, the total transmitted power of the satellites is limited by their power sources.

It is therefore desirable to share access to communications resources, such as frequency channels or satellite transponders, between different users of the communications resource, while avoiding collision between the users. For this reason, multiple access schemes have been devised for communications systems, such as time divided multiple access (TDMA) and code divided multiple access (CDMA). In multiple access scheme, the access to the communications resources by the users should be coordinated to avoid collision. In a TDMA or CDMA system, different time slots or codes are allocated to different users by a central station. However, this approach requires communication between the central station and each user in order to convey the allocation of time slots or codes. If the central station fails for any reason, then no allocation can take place.

Another proposed solution is for each user to transmit at a random time in a common frequency channel and to detect whether any collision occurred with another transmission. If collision occurs, the user re-transmits after a random interval. This system is known as "Aloha" and is described in more detail in the Calcutt and Tetley reference above. The probability of collision increases as the number of users sharing the common frequency channel increases and therefore each transmitter may need to make several attempts to transmit data before no collision occurs.

According to the present invention, there is provided a method and an apparatus for carrying out the method, in which information relating to transmissions to be made through a common communications resource is shared by a plurality of processors associated with the transmitters using the communications resource. At each of the processors, a set of rules is applied to the transmissions such that each processor arrives at a consistent decision as to how the transmissions are to be allocated to the common communications resource. The transmissions then take place using the common communications resource according to this decision. Each transmitter need only be in communication with its associated processor in order to determine the correct allocation of transmissions using the transmitter through the common communications resource. Therefore, transmissions may still be made by at least some of the transmitters even if some of the processors fail. Moreover, because transmissions in the communications resource are coordinated by means of a consistent common set of rules, the common channel is used efficiently without collision between transmissions.

According to another aspect of the present invention, there is provided a method and apparatus by which information from one ground station within the field of view of a satellite is broadcast to all the other ground stations within the field of view of the satellite. The information relates to access to the satellite required by the one ground station. In this way, information relevant to a particular satellite is only received by a ground station if it is in view of that satellite.

According to another aspect of the present invention, there is provided a method and apparatus by which a plurality of messages are sent to a corresponding plurality of transceivers. Each message requires an acknowledgement by the corresponding transceiver, and indicates a delay to be observed by the transceiver before responding. If a traffic peak of messages is detected by the apparatus sending the messages, the delays are varied between the different messages so that the peak rate of response by the transceivers is lower than the peak rate of message transmission.

Reference is made to copending UK patent application (Agent's Reference J.24019 GB), the contents of which are incorporated herein by reference.

Specific embodiments of the invention will now be described with reference to the accompanying drawings, in which:-
Figure 1 is a schematic diagram of a mobile satellite system network including a short message service centre, in an embodiment of the present invention;
Figure 2 is a sequence diagram of the transmission of an HPN signal following an unsuccessful attempt to deliver a short message in the network of Figure 1;
Figure 3 is a diagram of a high penetration channel frame format in the sequence of Figure 2;
Figure 4 is a schematic diagram of the user terminal in the network of Figure 1;
Figure 5 is a schematic diagram of one of the satellites in the network of Figure 1;
Figure 6 is a schematic diagram of one of the satellite access nodes in the network of Figure 1; and
Figure 7 is a flowchart of an algorithm performed at the satellite access node of Figure 6.

### Network

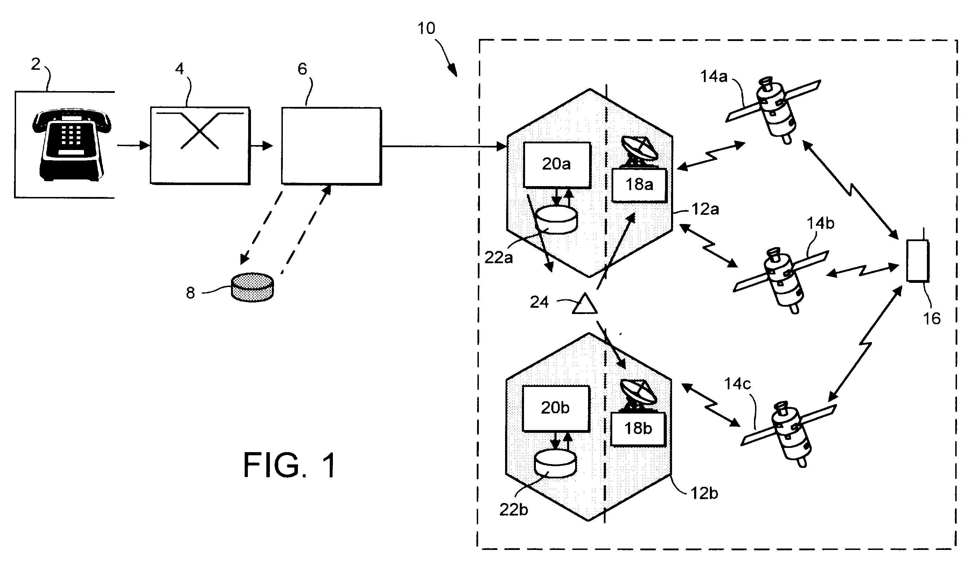

Fig. 1 shows schematically part of a satellite communications network used for communication of short messages and high-penetration notification messages to a mobile user.

A fixed user 2 is connected to a public service telephone network (PSTN) 4. By dialling an appropriate number, the fixed user 2 is connected through the PSTN 4 to a short message service (SMS) service centre 6, which controls the sending of short messages to a mobile user by selecting the most appropriate network connection. By communicating with a home location register (HLR) 8, the SMS service centre 6 is able to obtain location and customer profile information relating to the called mobile user.

The SMS service centre 6 is connected by appropriate communications links to one or more mobile communications networks which allow communication with mobile terminals. For example, the SMS service centre may be connected both to a terrestrial cellular network conforming to the GSM standard and supporting the GSM short message service and to a mobile satellite system and may preferentially select the terrestrial cellular network when the mobile terminal is in range thereof.

The SMS service centre 6 may also receive short message requests from mobile users, for example via a terrestrial cellular network or a mobile satellite system.

In Fig. 1, the SMS service centre 6 is connected to a mobile satellite system, such as the ICO™ system, which provides a messaging service including high penetration messaging. The mobile satellite system (MSS) 10 includes a plurality of satellite access nodes 12a, 12b which provide radio frequency communications links to a constellation of satellites 14a, 14b, 14c, at least some of which are in line-of-sight with a mobile user terminal 16 and enable wireless communications between one of the satellite access nodes 12 and the user terminal 16.

In one example as described in GB 2295296, there are twelve satellite access nodes 12 located in optimal positions throughout the world. The satellite constellation may comprise ten operational satellites in six-hour orbits in two orbital planes, each inclined at 45° to the equator. One spare satellite is provided in each plane. This arrangement of satellite access nodes 12 and satellites 14 provides a mobile satellite service with global coverage. Alternative mobile satellite systems, such as the Iridium™, Inmarsat™, or Odyssey™ systems may be used.

Each satellite access node 12 includes a land earth station (LES) 18a, 18b with multiple directional antennas which track some or all of the satellites 14 which are in view. Each satellite access node 12 also includes a mobile satellite switching centre (MSSC) 20 which routes communications traffic to other satellite access nodes and to gateways owned by third party operators who are authorised to access the mobile satellite system. The SMS service centre 6 is an example of one such gateway. Each MSSC 20 is connected to a visitor location register (VLR) 22, which comprises a database of details of user terminals 16 which are logged on to that satellite access node 12.

Information obtained from the HLR 8 identifies with which satellite access node 12 the user terminal 16 is registered and the SMS service centre 6 routes a message to the appropriate satellite access node 12 on the basis of that information. At that satellite access node 12, the mobile satellite switching centre 20 obtains more specific information from the VLR 22 to determine the location of the user terminal 16 more accurately and to determine to what type of message service the user terminal 16 has subscribed. This information determines how the satellite access node 12 will communicate with the user terminal 16, as discussed in more detail below.

### High Penetration Notification

A high penetration notification service is controlled by a high penetration notification (HPN) service centre 24 which communicates with the MSSC 20 and with the LES 18 of each satellite access node 12.

A high penetration notification is a message which is transmitted by one or more of the satellites 14 with a higher link margin than is used for short messages, voice or data traffic. The link margin is defined as the excess signal energy to noise density ratio needed adequately to decode a message in a line-of-sight channel. For example, normal voice and data channels have sufficient penetration to be received by a hand-held user terminal in operational position with its antenna deployed, in direct line of sight to a satellite. Short messages and control channels have sufficient penetration to be received by a handheld user terminal in a non-operational position, such as in a suitcase and/or with its antenna retracted and/or with light radio shadowing. A high penetration notification is used to send information to the user terminal 16 in situations where it may not be able to receive any other traffic, such as when the user terminal 16 is inside a building and/or out of line-of-sight from any of the satellites 14 and/or with its antenna retracted. The link margin of a high penetration notification gives sufficient penetration to allow reception and decoding of data by the user terminal in these circumstances. For example, the link margin may be 28dB. The link margin is a function of the transmit power and may additionally be increased by coding, such as convolutional coding.

### HPN after Short Message Failure

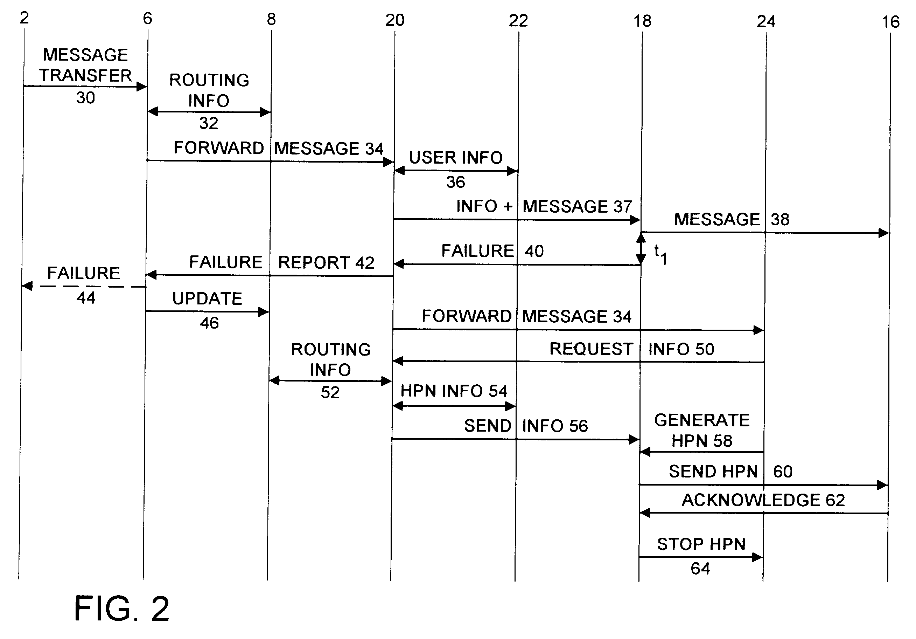

One example of the use of a high penetration notification message will now be described with reference to Figures 1 and 2. At step 30, a message is transferred from the fixed user 2 to the SMS service centre 6. The message includes an identity code, such as a telephone number, which identifies the intended recipient, in this case the user terminal 16. At step 32, the SMS service centre 6 sends information identifying the user terminal 16 to the home location register 8, which replies with routing information such as the identity of the satellite access node 12 with which the user terminal 16 is registered. At step 34, the SMS service centre 6 forwards the message from the user 2 to the mobile satellite switching centre 20 of the satellite access node 12 identified by the home location register 8, together with information identifying the user terminal 16.

At step 36, the mobile satellite switching centre 20 accesses the visitor location register 22, extracts therefrom detailed information on the location of the user terminal 16 and determines whether the owner of the user terminal 16 has subscribed to the short message service. At step 37, the message is sent to the LES 18 together with information relating to the expected location of the user terminal 16.

At step 38, the LES 18 selects a satellite which is likely to achieve transmission of the message to the user terminal 16 and selects a beam generated by that satellite 14 which covers the location of the user terminal 16 at that moment. The message is then sent via the selected satellite 14 via the selected beam to the user terminal 16.

The LES 18 detects whether any acknowledgement of the message is received from the user terminal 16 within a predetermined period t1. If no such acknowledgement is received, a failure signal is sent, at step 40, to the mobile satellite switching centre 20, which then sends, at step 42, a failure report to the SMS service centre 6. Optionally, the SMS service centre 6 sends a failure report 44 to the fixed user 2. In response to the failure report at step 42, the SMS service centre 6 updates the HLR 8 to include the information that the user terminal 16 is currently not responding to short messages.

In response to the paging failure at step 40, the mobile satellite switching centre 20 forwards the message contents to the HPN service centre 24, at step 48. The HPN service centre 24 then requests location information, together with other information needed for sending an HPN message, from the mobile satellite switching centre 20, at step 50. The mobile satellite switching centre 20 obtains the required information from the home location register 8 at step 52 and from the visitor location register 22 at step 54, and sends the required information to the LES 18 at step 56.

At step 58, the HPN service centre 24 generates an HPN message derived from the original message which was transferred at step 48, and the LES 18 sends the HPN message at step 60 to the user terminal 16. The process of sending the HPN message at step 60 will be described in more detail below.

When the user terminal 16 receives the HPN message, it sends an acknowledgement signal to the LES 18 at step 62. In response to this acknowledgement, the LES 18 signals to the HPN service centre 24 that the HPN has been acknowledged, at step 64, and thereby prevents further attempts by the HPN service centre 24 to send an HPN message derived from the same original message.

### HPN Message Content

The HPN service centre 24 receives the original message and may derive the contents of the HPN message from the original message or may generate an HPN message independently of the content of the original message. For example, the HPN service centre 24 may discard the content of the message and generate a simple notification signal as the HPN message. Hence, the HPN message indicates simply to the user terminal 16 that an attempt has been made to communicate with it. Alternatively, the HPN message may consist of the telephone number of the fixed user 2, a truncated version of the original message or a user message tag which indicates one of a set of messages previously stored at the user terminal 16 (e.g. "I'm on the next train home").

### HPN Message Burst

The HPN message is transmitted by the LES 18 in a message burst, consisting of a synchronisation preamble, system and satellite information, message data and error check data. The satellite information includes a code identifying the satellite used to transmit the HPN message.

The system information block may further include an acknowledgement channel frequency reference and an acknowledgement channel time delay reference, which informs the user terminal 16 which frequency to use for sending the acknowledgement signal, at step 62, and how long to delay before sending the acknowledgement.

### HPN Transmission Channel

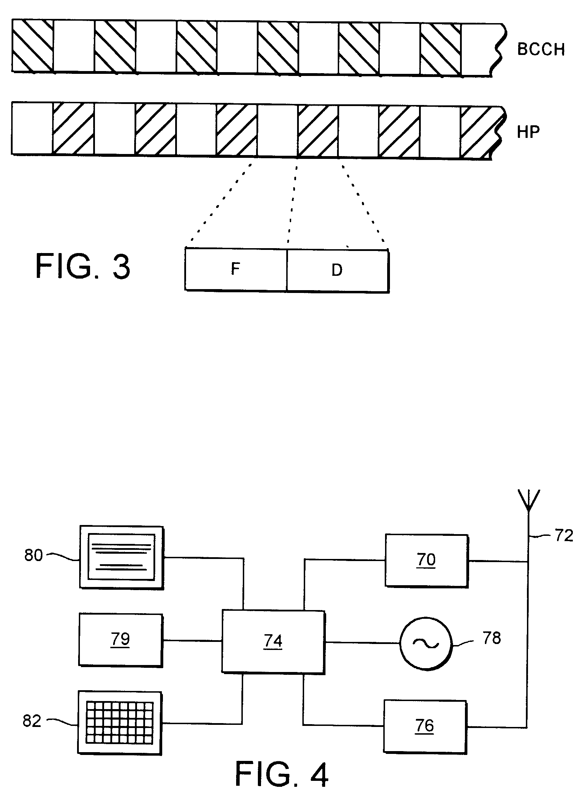

The timing of the HPN transmission channel, as transmitted by one of the satellites 14, is shown in Figure 3. The high-penetration message bursts HP are interleaved with broadcast channel (BCCH) bursts. Each high penetration message burst comprises a data slot D preceded by a synchronisation preamble burst F which provides a frequency and timing reference.

The timing of the broadcast channel and high penetration slots shown in Figure 3 is referenced with respect to the satellite, so that the satellite is never required to transmit both broadcast channel and high penetration bursts at the same time. In this way, the peak power requirement of the satellite is kept below a defined limit and power fluctuations in the satellite are avoided.

The user terminal 16 receives the system and satellite information and records the arrival time of the message burst. From this information, the user terminal 16 synchronises its own transmit and receive burst timing with that of the system.

### HPN Message Types

The message burst contents further include a temporary user ID, similar to the TMSI of the GSM system, which identifies the user for which the message is intended, and a message ID which includes a message reference ID and a message type ID identifying the type of message to be sent.

The data slot D may contain a whole message or part of a longer message. In the latter case, the message contents of a series of data slots D addressed to the user terminal 16 are concatenated by the user terminal 16 to reconstruct the original message.

Preferably, the message contents may be encrypted or scrambled so that only the user identified by the temporary ID is able to decode the message. The message contents may be encoded so as to increase the effective link margin, for example by means of convolutional coding.

### User Terminal

The operation of the user terminal 16, when receiving an HPN signal, will now be described with reference to Figure 4. The user terminal comprises a receiver 70, which demodulates RF signals received from an antenna 72 and sends the demodulated signals to a controller 74. The controller 74 sends signals, such as the acknowledge signal of step 62, to a transmitter 76, which RF modulates the signal and outputs the RF modulated signal to the antenna 72 so that it is transmitted.

The controller 74 controls the frequency and timing of the receiver 70 and transmitter 76. The controller 74 includes a clock from which the receive and transmit timings are determined. The clock is driven by an oscillator 78. Messages received by the receiver 70 are stored in a memory 79 and can be displayed on a display 80, such as an LCD screen. The user controls the operation of the user terminal 16 by means of a key pad 82, so as to retrieve, display and clear messages. The memory 79 also stores a look-up table of messages which are identified by received message tags.

The user terminal 16 may also include a microphone, earpiece, analog-to-digital and digital-to-analog convertors and a codec so that it can be used as a mobile telephone. Alternatively, if the user terminal 16 is configured as a pager only, these additional parts may be omitted.

### Satellite

The transmission power of the satellites 14 is limited by the power which is available from their solar arrays and from battery storage when the satellite 14 is in the earth's shadow. The high penetration notification bursts consume a significant proportion, as much as 20%, of the total transmit power of the satellite 14. Therefore, each satellite 14 provides only one HPN transponder which is shared among the LESs 18 and among the transmit beams of the satellite 14.

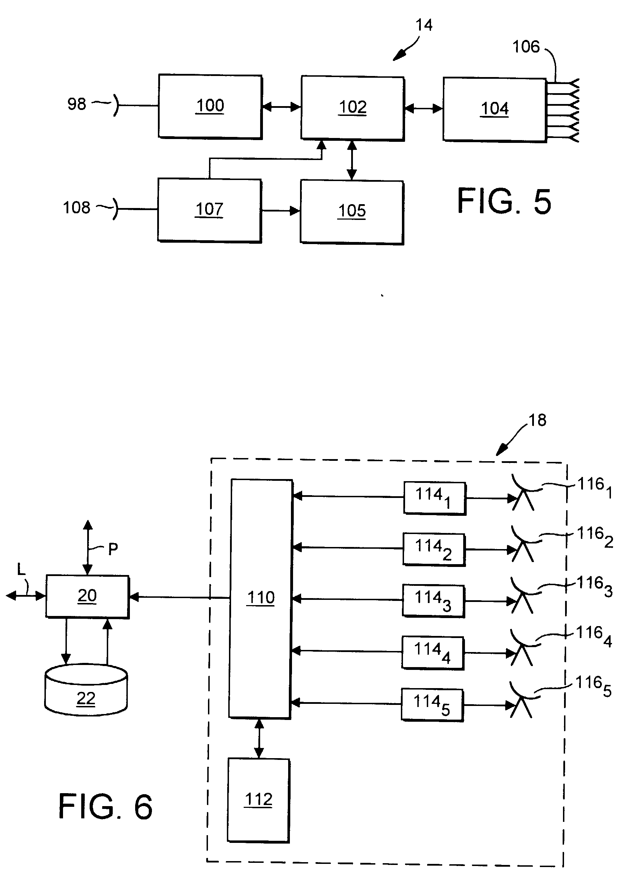

As shown in Figure 5, each satellite 14 has a feeder link communication subsystem 100, which transmits and receives communications channels through a feeder link with the LES 18, by means of a feeder link antenna 98. The feeder link antenna 98 generates a broad beam covering substantially all of the earth's surface within the field of view of the satellite 14, so as to receive signals from any one of the satellite access nodes 12 within the field of view.

The feeder link communications subsystem 100 provides a C-to-C band transponder in which uplink C-band feeder link channels are mapped onto respective downlink feeder link channels at different C-band frequencies, allowing communication between those of the satellite access nodes 12 which are within the beam of the feeder link antenna 98.

The feeder link communications subsystem 100 is connected via a channel processing subsystem 102 to a mobile communications subsystem 104, which controls a multi-beam antenna array 106. The mobile communication subsystem 104 and multi-beam antenna 106 generate an overlapping array of spot beams over the coverage area of the satellite 14, which provide user links to mobile user terminals.

The channel processing subsystem 102 maps feeder link channels onto mobile link channels in the spot beams generated by the mobile communication subsystem 104 according to a resource management subsystem 105 including a channel assignment table, which can be modified by signals received from the LES 18 via a telemetry, tracking and control (TT&C) subsystem 107 of the satellite 14. The TT&C subsystem 107 receives channel assignment information from one or more of the LESs 18 by means of a TT&C antenna 108.

Details of an example of the satellite communication system are given in patent publication number WO95/28747.

The output of the HPN transponder is connected to only one of the beams of the multibeam antenna 106 at any one time, as a result of the limit on the instantaneous power of the HPN message burst. The beam to which the HPN transponder is connected can be selected for each HPN message burst, as will now be described.

The feeder link communication subsystem 100 allocates a dedicated frequency channel in the feeder link to HPN message bursts. The channel assignment table comprises a data store storing a set of data triplets representing the beam assignment, the mobile link frequency assignment and the transponder gain for the HPN transponder. At a predetermined time before one of the LESs 18 sends an HPN message burst, that LES 18 transmits to the TT&C subsystem 107 a selection command which identifies one of the data triplets in the channel assignment table. That data triplet determines in which beam, at what frequency, and with what gain the subsequent HPN message burst will be transmitted. The resource management subsystem controls the channel processing subsystem 102 to allocate the indicated beam, frequency and gain to the HPN transponder, after a predetermined interval from the reception of the selection command, in synchronism with the reception of the subsequent HPN message burst so that the HPN message is transmitted with that allocation. In this way, the HPN transponder can be assigned to any one of the spot beams, under control of any one of the LESs 18 within view of the satellite 14.

### HPN Scheduling

Since each of the LESs 18 within the line of sight of the satellite 14 is able to send an HPN message to that satellite 14 and is able to control the beam assignment for that message, negotiation between satellite access nodes 12 is required so as to schedule the HPN resource between the satellite access nodes 12.

The satellite access nodes 12 are interconnected by a network, as described for example in GB 2295296. The network may comprise telephone or ISDN lines, proprietary lines or any other type of connection which allows reliable communications between the satellite access nodes 12. The satellite access nodes 12 also communicate with each other via the C-to-C band links provided by the satellites 14.

A schematic diagram of one of the satellite access nodes 12 is shown in Figure 6. The mobile satellite switching centre 20 is connected by links L to gateways operated by authorised third parties and by the link P to other mobile satellite switching centres 20 of other satellite access nodes 12. Messages, such as short messages or HPN messages are sent to a controller 110 of the LES 18, where they are stored in a storage buffer 112 prior to transmission. The controller 110 sends each message for transmission via one of a set of radio-frequency modulators 114₁₋₅ to a selected one of a group of antennas 116₁₋₅, each of which generates a narrow beam steered to one of the satellites 14.

At predetermined intervals, for example every five to ten seconds, each satellite access node 12 transmits on the C-to-C channel, to each of the other satellite access nodes 12 in line of sight of the same satellite 14, information on the queued messages stored in the storage buffer 112 which that satellite access node 12 is ready to send. The information includes the location of the intended recipient user terminal, the possible frequencies and time slots to be used in the mobile link, the length of the message and the priority assigned to it. The information is transmitted in a time slot in a C-to-C band feeder link channel allocated to the transmitting satellite access node 12. Preferably, each satellite node 12 transmits in the C-to-C band feeder link channel of each satellite 14 information relating only to those messages which are to be transmitted via that satellite 14. Each of the satellite access nodes 12 compiles data on all of the queued messages waiting to be transmitted at any of the satellite access nodes 12 for each of the satellites 14 being tracked by that satellite access node 12.

Alternatively, information on the queued messages is sent via the network which interconnects the satellite access nodes 12.

### Scheduling Algorithm

The controller 110 of each satellite access node 12 applies the same scheduling algorithm to the compiled list of messages to determine the order in which the messages should be sent in the feeder link HPN channel for transmission by the HPN transponder. Since the same algorithm is applied to the same data at each satellite access node 12, the same decision is made at controller 110 of each satellite access node 12 on the order in which HPN messages are to be transmitted by the HPN transponder channel and the HPN burst can be transmitted by the LESs 18 to each satellite 14 without collision in the feeder link channel or requiring use of the HPN transponder by two messages at the same time.

The scheduling algorithm may also determine the frequency and time slot assigned to the user terminal 16 for acknowledgement, so as to avoid collision between acknowledgement signals from user terminals 16.

In addition, where there is a peak in the HPN message traffic level transmitted in a particular beam, the acknowledgement delay for HPN messages earlier in the peak is set shorter than the acknowledgement delay for HPN messages later in the peak, so as to extend the period over which the acknowledgement signals are transmitted and to reduce the corresponding peak in acknowledgement traffic within that beam.

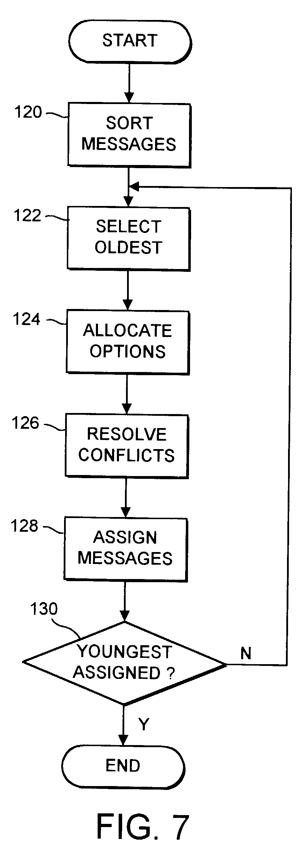

An example of the scheduling algorithm is shown in the flow chart of Figure 7. At step 120, the controller 110 compiles a list of all the messages waiting to be sent via the satellite 14 which are being tracked by the satellite access node 12. At step 122, a set of the oldest messages which have not yet been assigned a transmission slot is compiled. At step 124, each of this set of messages is allocated to all the potential transmission slots for that message. At step 126, conflicts in which more than one message is allocated to the same potential slot are resolved in favour of those messages which have only one potential slot allocation. At step 128, all of those messages from the current set which can be assigned slots after resolving conflicts are assigned those slots, and those which cannot be assigned are marked with a flag for allocation in a later scheduling cycle. At step 130, it is determined whether the most recent messages have yet been processed. If not, the algorithm returns to step 122 where a new set of messages is compiled, from the oldest messages not yet processed. If the most recent messages have been processed, the current scheduling cycle ends, but starts again after new information on messages waiting at the other satellite access nodes 12 has been received.

Any messages which are not acknowledged by the respective user terminal 16 are kept in the queue of messages at each satellite access node 12 and will be included in the next list of messages sent to the other satellite access nodes 12.

Since the HPN message burst provides synchronisation information to all user terminals 16 within the coverage area of a spot beam, it is preferred that an HPN burst should be transmitted in each spot beam at intervals shorter than a predetermined maximum. The algorithm used by the satellite access nodes 12 determines the potential slots of the messages in accordance with the spot beam to which the messages will be delivered, so as to ensure that each of the spot beams is allocated at least one HPN message within the predetermined maximum interval. If required, dummy messages are added to the message queue at one of the satellite access nodes to ensure that this criterion is satisfied. If no HPN messages are assigned to any time slot, a dummy message is added to fill that time slot, so as to avoid power fluctuations in the satellite.

While the above embodiments have been described with reference to a mobile satellite communications system, aspects of the invention are also applicable to any system in which a communications resource must be shared by a plurality of transmitters. The use of a consistent scheduling algorithm allows coordinated distributed allocation of the resource without the need for a master controller to determine the order of allocation.

In the preferred embodiment, a controller 110 is provided at each satellite access node 12 for performing the algorithm. However, one controller may provide scheduling information for more than one transmitter (as for example the controller 110 does when determining the scheduling of acknowledgement signals for a plurality of terminals registered with that satellite access node 12) or several controllers could be provided for one transmitter so as to provide a backup in case of failure of one of the controllers. The controllers need not be physically located close to a transmitter, although it is preferable to have a reliable communications link between the controller and the transmitter.

In the preferred embodiment described above, each controller 110 performs the same algorithm on the same data for any one common communications resource. However, each controller need only determine the scheduling of transmissions for the transmitters to which it sends scheduling information. Therefore, the scheduling algorithms performed by different controllers may differ in that each controller need not resolve conflicts between messages which would not affect transmissions by a transmitter associated with that controller, but need only designate the potential slot over which there is a conflict as not being available to the associated transmitter or transmitters. The algorithms performed by different controllers need only be sufficiently consistent to avoid collisions.

The above embodiment uses a TDMA channel format to separate message bursts in the HPN channel. However, the scheduling algorithm may also be applied to other multiple access formats, such as CDMA or spread spectrum TDMA. For example, the scheduling algorithm may determine the spread-spectrum code to be used for each message in such a way as to minimise interference.

Preferably, the HLR 8 and the VLR 22 comprise HLR and VLR apparatus based on those used for the GSM system, to allow the use of off-the-shelf components and reduce development costs. Alternatively, equipment specifically developed for a mobile satellite system or a non-GSM terrestrial system may be used.

References to mobile user terminals will be understood to include hand-held terminals, vehicle-mounted terminals including aeronautical and marine terminals, and temporary or permanent installations such as wireless telephone booths or stations or telephone networks connected to a wireless communications link.

Aspects of the present invention are applicable to terrestrial cellular systems such as GSM systems, for co-ordinating the use of common signalling channels. Aspects of the present invention may also be applied to mobile systems such as the proposed Iridium™, and Odyssey™ systems and the existing or proposed Inmarsat™ systems or compatible systems.

In satellite communication systems where switching and channel assignment is controlled by a processing system on each satellite, the processing system of each satellite may perform a scheduling algorithm in accordance with an embodiment of the present invention.

The apparatus of the communications system is described in terms of functional blocks. However, the skilled person will appreciate that the blocks do not necessarily represent discrete physical units but instead the functions of several blocks may be integrated or a single function may be distributed among discrete units.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept as defined in the claims.

## Claims

1. A method of allocating a plurality of transmissions to a common communications resource, comprising the steps of:
receiving at each of a plurality of processors a set of transmission data representing said plurality of transmissions, and
determining at each of said processors allocation data representing allocation of said transmissions to said communications resource such that interference between said transmissions is substantially avoided.

2. A method as claimed in claim 1, wherein said determining step is performed by means of a common algorithm such that the allocation data determined at each of said processors corresponds to the same allocation as the allocation data determined at the other ones of said processors.

3. A method as claimed in claim 2, wherein the common algorithm includes the steps of:
determining priority data representing the priority of the transmissions;
determining potential allocation data representing potential allocations of each of said transmissions to said common communications resource, and
determining said allocation data by associating said transmission data with said potential allocation data so as to allocate the corresponding transmissions to said communications resource according to the priority data.

4. A method as claimed in claim 3, wherein the priority data represents the delay incurred in allocating the transmissions to said common communications resource and the allocation data is determined by allocating with priority those of said transmissions for which said delay is longer.

5. A method as claimed in claim 3 or 4, wherein said step of determining said allocation data comprises associating said transmission data with said potential allocation data such that at least some of said transmissions are associated with one or more portions of said communications resource, and further comprises:
(a) determining which of said transmissions are associated with only one of said portions;
(b) allocating the transmissions determined at step a) to said corresponding portions;
(c) dissociating from the remaining transmissions those portions allocated at step b),
and repeating at least steps a) and b) to perform further allocations.

6. A method as claimed in any preceding claim, further comprising transmitting from each of said processors to at least one other of said processors a portion of said transmission data representing ones of said transmissions to be transmitted by said one or more transmitters associated with said processor.

7. A method as claimed in any preceding claim, further comprising transmitting from each of said processors to an associated one or more transmitters an allocation signal derived from said allocation data, said allocation signal determining the allocation of the transmissions from said transmitter to the common communications resource.

8. A method as claimed in claim 7, further comprising transmitting from each of said transmitters one or more of said transmissions using a portion of the common communications resource determined by said allocation signal.

9. A method as claimed in any claim 7 or 8, wherein the transmitters are communications stations for providing communications links with user terminals in a mobile communications system.

10. A method as claimed in claim 9, wherein the communications stations are terrestrial cellular base stations.

11. A method as claimed in claim 9, wherein the communications stations are ground stations for mobile satellite communications.

12. A method as claimed in claim 11, wherein the ground stations include tracking antennas for tracking non-geostationary satellites.

13. A method as claimed in claim 7 or 8, wherein the transmitters are user terminals in a mobile communications system.

14. A method as claimed in any preceding claim, wherein the common communications resource comprises a common transmission channel.

15. A method as claimed in any preceding claim, wherein the common communications resource comprises a retransmission apparatus.

16. A method as performed by any one of said processors in the method as claimed in any preceding claim.

17. Apparatus for allocating a plurality of transmissions to a common communications resource, comprising:
a plurality of processors each arranged to receive a set of transmission data representing said plurality of transmissions;
each of said processors comprising means for determining allocation data representing allocation of said transmissions to said communications resource such that interference between said transmissions is substantially avoided.

18. Apparatus as claimed in claim 17, further comprising means for transmitting from each of said processors to an associated one or more transmitters an allocation signal derived from said allocation data, said allocation signal determining the allocation of transmissions from said transmitter to the common communications resource.

19. Apparatus as claimed in claim 17 or claim 18, further comprising means for transmitting from each of said processors to at least one other of said processors a portion of said transmission data representing ones of said transmissions to be transmitted by said one or more transmitters associated with said processor.

20. Apparatus as claimed in claim 18 or 19, wherein said transmitters are communications stations for providing communications links with user terminals in a mobile communications system.

21. Apparatus as claimed in claim 20, wherein the communications stations are terrestrial cellular base stations.

22. Apparatus as claimed in claim 20, wherein the communications stations are ground stations for mobile satellite communications.

23. Apparatus as claimed in claim 22, wherein the ground stations include tracking antennas for tracking non-geostationary satellites.

24. Apparatus as claimed in claim 18 or 19, wherein the transmitters are user terminals in a mobile communications system.

25. A processor comprising one of said processors of the apparatus as claimed in claim 17.

26. A satellite payload including a processor as claimed in claim 25.

27. A method of distributing information from a first satellite ground station to a plurality of further satellite ground stations, comprising the step of:
transmitting said information to a satellite such that the information is broadcast from the satellite to said further ground stations;
wherein the information indicates access to the satellite required by the first satellite ground station.

28. A method as claimed in claim 27, further comprising:
transmitting from each of said further satellite ground stations respective further information via said satellite such that the further information is broadcast from the satellite to said first satellite ground station and to the other ones of said further satellite ground stations;
wherein the further information indicates access to the satellite required by the respective satellite ground station.

29. A method as claimed in claim 27 or 28, wherein said respective information transmitted by each of said ground stations indicates transmissions required to be made by that ground station via said satellite.

30. Apparatus for distributing information from a first satellite ground station to a plurality of further satellite ground stations, comprising:
means for deriving said information which indicates access to the satellite required by the first satellite ground station; and
means for transmitting said information to a satellite such that the information is broadcast from the satellite to said further satellite ground stations.

31. Apparatus as claimed in claim 30, wherein said information indicates transmissions required to be made by said first ground station via said satellite.

32. A method of controlling the transmission of responses from a plurality of transceivers, comprising:
transmitting to each of said transceivers a corresponding signal including data indicating a delay to be observed by that transceiver between reception of said transmission and transmission of a response by the transceiver;
wherein the delays for the plurality of transceivers are selected so that the transmissions of the responses are distributed over a longer period than the transmissions of the signals.

33. A method as claimed in claim 32, wherein the signals are transmitted via satellite and the responses are received via satellite.

34. Apparatus for controlling the transmission of responses from a plurality of transceivers, comprising:
means for transmitting to each of said transceivers a corresponding signal including data indicating a delay to be observed by that transceiver between reception of said transmission and transmission of a response by the transceiver; and
means for selecting the delays so that the transmissions of the responses are distributed over a longer period than the transmissions of the signals.

35. Apparatus as claimed in claim 34, for use in a satellite ground station for communication with said transceivers via a satellite.
